(19) Europäisches Patentamt
European Patent Office
Office européen des brevets

(11) Veröffentlichungsnummer: **0 167 924**
**B1**

(12) **EUROPÄISCHE PATENTSCHRIFT**

(45) Veröffentlichungstag der Patentschrift: **12.09.90**

(51) Int. Cl.[5]: **C 08 G 77/06,** C 08 G 77/18

(21) Anmeldenummer: **85107864.2**

(22) Anmeldetag: **25.06.85**

# (54) Verfahren und Vorrichtung zur kontinuierlichen Herstellung von Alkoxypolysiloxanen.

(30) Priorität: **07.07.84 DE 3425067**

(43) Veröffentlichungstag der Anmeldung: **15.01.86 Patentblatt 86/03**

(45) Bekanntmachung des Hinweises auf die Patenterteilung: **12.09.90 Patentblatt 90/37**

(84) Benannte Vertragsstaaten: **BE DE FR GB IT NL**

(56) Entgegenhaltungen:
**EP-A-0 003 610**
**EP-A-0 032 376**
**US-A-3 668 180**
**US-A-4 032 557**

(73) Patentinhaber: **Th. Goldschmidt AG**
**Goldschmidtstrasse 100 Postfach 101461**
**D-4300 Essen 1 (DE)**

(72) Erfinder: **Giesing, Herbert**
**Grävenweg 15**
**D-4300 Essen (DE)**
Erfinder: **Koerner, Götz, Dr.**
**Kantorie 126**
**D-4300 Essen (DE)**
Erfinder: **Kropac, Vaclav**
**Sundernholz 62**
**D-4300 Essen (DE)**
Erfinder: **Patzke, Hans-Jürgen**
**Middelicherstrasse 260**
**D-4650 Gelsenkirchen-Resse (DE)**
Erfinder: **Quilitsch, Herbert**
**Bandelstrasse 23**
**D-4300 Essen (DE)**
Erfinder: **Rau, Harald**
**Schmettaustrasse 11**
**D-4300 Essen (DE)**
Erfinder: **Schamberg, Eckehard, Dr.**
**Grotehang 6**
**D-4300 Essen (DE)**
Erfinder: **Spieker, Fritz**
**Kirchhofsallee 28**
**D-4300 Essen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 167 924 B1

(72) Erfinder: **Weitemeyer, Christian, Dr.**
**Sundernholz 67**
**D-4300 Essen (DE)**

**Beschreibung**

Die Erfindung betrifft ein Verfahren zur kontinuierlichen Herstellung von Alkoxypolysiloxanen der allgemeinen Formel

$$R^1_aSi(OR^2)_b \qquad \text{I}$$
$$O_{\frac{4-(a+b)}{2}}$$

wobei
$R^1$ ein Alkyl- oder Arylrest,
$R^2$ ein niederer Alkylrest mit 1 bis 4 Kohlenstoffatomen,
$a \leqq 1,5$,
$b \leqq 2$ und
$a+b \leqq 3$ ist,
durch Solvolyse von Chlorsilanen der allgemeinen Formel

$$R^1_aSiCl_{4-a}$$

mit, bezogen auf siliciumgebundenes Chlor, einem Überschuß an Alkohol und einem Unterschuß an Wasser und partielle Kondensation der Solvolyseprodukte. Die Erfindung betrifft ferner eine Vorrichtung zur Durchführung dieses Verfahrens.

Alkoxypolysiloxane sind aufgrund der an Silicium gebundenen Alkoxygruppen reaktive Verbindungen, die entweder, z.B. für Imprägnierungszwecke, als solche unmittelbar verwendet werden können oder reaktive Zwischenprodukte sind. Alkoxypolysiloxane der vorgenannten Formel I stellen ferner wertvolle Vorprodukte für härtbare Siliconharze dar.

Es ist dabei besonders wichtig, derartige Alkoxypolysiloxane in möglichst gleichmäßiger und reproduzierbarer Zusammensetzung auf kostengünstigem Wege und in möglichst einfacher Verfahrensdurchführung herzustellen. Die Erfüllung dieser Forderungen wird jedoch durch die unterschiedliche Reaktivität der Silane je nach Funktionalität und Substitution erschwert. Ein besonderes Problem besteht darin, daß einige trifunktionelle Silane bei der Umsetzung mit Wasser auch in Gegenwart eines Überschusses an Alkohol zur Vergelung neigen und sich dadurch in unkontrollierbarer Weise der Kondensation zu einheitlichen Alkoxypolysiloxanen entziehen können. Es ist deshalb besonders schwierig, reproduzierbare Alkoxypolysiloxane herzustellen, deren a-Wert niedrig, insbesondere $\leqq 1,5$, ist, da zur Herstellung solcher Alkoxypolysiloxane Silangemische mit hohem Anteil an trifunktionellen Silanen oder bei besonders niedrigen a-Werten trifunktionelle Silane allein verwendet werden.

Besonders erwünscht ist dabei die Herstellung von Alkoxypolysiloxanen auch niedrigen a-Wertes in einem kontinuierlichen Verfahren, da nur durch ein kontinuierliches Verfahren hohe Raum-/Zeitausbeuten bei vertretbarem apparativen Aufwand erreichbar sind.

Aus dem Stand der Technik sind bereits kontinuierlich durchführbare Verfahren zur Herstellung von Alkoxypolysiloxanen bekannt. Bei diesen bekannten Verfahren versucht man, den vorgenannten Schwierigkeiten der hohen Reaktivität insbesondere der trifunktionellen Halogensilane mit Wasser dadurch zu begegnen, daß man die Reaktion durch Zusatz eines inerten Lösungsmittels dämpft und/oder die Halogensilane zunächst ganz oder überwiegend in die Alkoxysilane überführt und diese zunächst entstehenden Alkoholyseprodukte dann mit unterschüssigen Mengen Wasser umsetzt und partiell kondensiert. Man trennt somit die Alkoholyse einerseits von der Hydrolyse und Kondensation andererseits und führt diese Reaktionen entweder in unterschiedlichen Reaktionszonen einer Apparatur oder in voneinander getrennten Reaktionsgefäßen durch. Dabei wird die Alkoholyse in der Regel bei höheren Temperaturen, insbesondere den Siedetemperaturen der verwendeten Alkohole, durchgeführt. Bei dieser Reaktion und unter diesen Reaktionsbedingungen wird die überwiegende Menge des entstehenden Halogenwasserstoffs frei und aus dem System entfernt.

Der nächstliegende Stand der Technik wird insbesondere durch die nachfolgenden Druckschriften repräsentiert:

Die DE—OS 20 61 189 betrifft ein Verfahren zur kontinuierlichen Herstellung von gegebenenfalls substituierten Alkoxysilanen bzw. gegebenenfalls substituierten Alkoxypolysiloxanen durch Umsetzung von Chlorsilanen mit gegebenenfalls substituierten Alkoholen und gegebenenfalls Wasser in einer mit Rückflußkühler versehenen, bei erhöhter Temperatur gehaltenen Kolonne und ist dadurch gekennzeichnet, daß das Chlorsilan am Kopf der Kolonne, der gegebenenfalls substituierte Alkohol in Gasform von unten oder an einer Stelle zwischen dem unteren Ende und dem oberen Ende des untersten Drittels der Länge der Kolonne und Wasser, falls mitverwendet, an einer beliebigen Stelle der Kolonne eingeführt werden, das Reaktionsprodukt aus dem unteren Ende bzw. unterhalb der Einführungsstelle des Alkohols aus der Kolonne geführt wird, mindestens zwei Drittel der Strecke zwischen dem Eintritt des Alkohols und dem Eintritt des Silans in die Kolonne, die Kolonne über ihren gesamten Innenquerschnitt bei einer Temperatur von mindestens 1/2°C oberhalb des Siedepunkts des jeweils verwendeten Alkohols bei dem jeweils in der Kolonne herrschenden Druck gehalten wird und während der Umsetzung stets unter Rückfluß siedender, überschüssiger Alkohol am Kolonnenkopf zugegen ist. Wie insbesondere aus den Beispielen hervorgeht, steht dabei die kontinuierliche Herstellung von Alkoxysilanen im Vordergrund. So wird beispielsweise im Kopf der Kolonne bei Raumteperatur befindliches Methyltrichlorsilan in die Kolonne eingespeist, die auf eine Temperatur von 100°C beheizt ist. Unterhalb der Silaneinführungsstelle wird Ethanol in Gasform, das eine Temperatur von 110°C hat, eingeführt. Die Umsetzung des Ethanols mit dem Methyltrichlorsilan vollzieht sich somit bei hohen Temperaturen. Das entstehende Alkoxysilan fließt aus dem unteren Ende

der Kolonne aus und wird dann durch Abdestillation überschüssigen Ethanols gereinigt.

Soll gleichzeitig eine partielle Hydrolyse des Methyltrichlorsilans erfolgen, wird nach dem entsprechenden Beispiel das Methyltrichlorsilan in Former seiner Lösung in Toluol eingesetzt und das Wasser gasförmig mit einer Temperatur von 105°C unterhalb der Silaneinführungsstelle in die Kolonne eingeführt. Dabei entsteht jedoch nicht ein gleichmäßiges, verhältnismäßig hochmolekulares Reaktionsprodukt, sondern ein Gemisch aus niedrigmolekularen Methylethoxypolysiloxanen und Methyltriethoxysilan.

Eine Weiterentwicklung dieses Verfahrens ist in der DE—OS 28 06 036 beschrieben. Das Kennzeichen dieses Verfahrens besteht darin, daß in eine mit einer Kolonne und gegebenenfalls Rückflußkühler ausgestattete und bereits gewünschtes Polysiloxan enthaltende Blase stetig Alkohol, Wasser und erforderlichenfalls sauer Katalysator, der die Kondensation von Si-gebundenen, kondensationsfähigen Gruppen fördert, in solchen Mengen eingeführt werden, daß in der Blase mindestens 5 Gewichtsprozent Alkohol und 0,001 bis 5 Gewichtsprozent Katalysator, jeweils bezogen auf das Gesamtgewicht von in der Blase vorhandenem Alkohol, Katalysator und Polysiloxan vorliegen, der Inhalt der Blase zum Sieden unter Rückfluß erhitzt, umzusetzendes Halogensilan mindestens 1 m oberhalb des unteren Kolonnenendes in die Kolonne eingeführt und Polysiloxan im Maße seiner Bildung stetig aus der Blase abgezogen wird.

Bei diesem Verfahren arbeitet man wieder mit einer Kolonne mit Rückflußkühler und einer Blase, die bereits gewünschtes Polysiloxan enthält und der ständig Alkohol, Wasser und gegebenenfalls Katalysator in bestimmten Mengen zugeführt wird, so daß bei dem unter Rückflußbedingungen verlaufenden Verfahren der für die Alkoholyse verwendete Alkohol siedet und wobei das Halogensilan unter Einhaltung eines Mindestabstandes zum unteren Kolonnenende in die Kolonne eingespeist wird. Hier findet somit die Alkoholyse in der Kolonne statt, während die Hydrolyse und Kondensation nach der Alkoholyse in der Blase der Vorrichtung ablaufen. Bei diesem Verfahren ist somit eine Trennung der Alkoholysereaktion einerseits und der Hydrolyse-/Kondensationsreaktion andererseits erreicht.

Das Verfahren erfordert verhältnismäßig hohen Energieaufwand, da permanent unter Rückflußbedingungen gearbeitet werden muß. Der Durchsatz der Vorrichtung ist durch die Notwendigkeit der Vorreaktion im oberen Bereich der Kolonne begrenzt.

Eine weitere Modifikation dieses Verfahrens ist in der europäischen Patentanmeldung 0 032 376 beschrieben. Das Verfahren ist dadurch gekennzeichnet, daß in einer 1. Stufe in einem 1. Reaktor in jeweils flüssiger Form Chlorsilan und aliphatische Verbindung mit einer alkoholischen Hydroxylgruppe in Mengen von 0,5 bis 0,9 Grammol alkoholischer Hydroxylgruppen je Grammatom Si-gebundenen Chlors im Gleichstrom eingeführt und in diesem Reaktor miteinander vermischt werden und das aus dem 1. Reaktor ausgetretene flüssige Reaktionsgemisch in einer 2. Stufe am Kopf einer als 2. Reaktor verwendeten und bei erhöhter Temperatur gehaltenen Kolonne, aliphatische Verbindung mit einer alkoholischen Hydroxylgruppe in mindestens zur vollständigen Umsetzung von restlichem Si-gebundenen Chlor in dem bei der 1. Stufe erhaltenen Reaktionsgemisch ausreichender Menge gasförmig am unteren Ende der Kolonne oder an einer Stelle zwischen dem unteren Ende und dem oberen Ende des unteren Drittels der Kolonne sowie gegebenenfalls Wasser an einer beliebigen Stelle der Kolonne eingeführt und das Reaktionsprodukt aus dem unteren Ende bzw. unterhalb der Einführungsstelle von aliphatischer Verbindung mit einer alkoholischen Hydroxylgruppe aus der Kolonne geführt wird.

Bei diesem Verfahren findet somit im ersten Reaktion die Alkoholyse mit einer Teilmenge des Alkohols statt. Die restliche Alkoholmenge wird dem Verfahrensprodukt im zweiten Reaktor zugegeben, wobei, falls man auch eine Kondensation der Silane zu Siloxanen wünscht, das Wasser in den zweiten Reaktor eingespeist wird. Dieser zweite Reaktor ist wiederum als Kolonne ausgebildet, und der Zusatz der restlichen Menge Alkohol und gegebenenfalls des Wassers erfolgt in der beheizten Kolonne. Die Beispiele beschreiben ausschließlich die Herstellung von Alkoxysilanen. Der Nachteil auch dieses Verfahrens besteht in der Notwendigkeit einer verhältnismäßig aufwendigen Apparatur und der Einhaltung hoher Temperaturen, nämlich mindestens der Siedetemperatur des verwendeten aliphatischen Alkohols.

In der US—PS 3 668 180 wird ein Verfahren zur Herstellung von Alkoxyorganopolysiloxanen beschrieben, bei dem zunächst ein Organohalogensilan in Gegenwart eines Kohlenwasserstofflösungsmittels, Wasser und eines niederen aliphatischen Alkohols in einem Reaktor bei −10 bis +10°C umgesetzt wird und wobei kontinuierlich dieses Vorprodukt einem zweiten Reaktor zugeführt wird, der zusätzlich Lösungsmittel enthält und wobei dort unter Rückflußbedingungen die Reaktion zu Ende geführt wird. Auch hier besteht der Nachteil des Verfahrens in der Notwendigkeit der Verwendung zweier Reaktoren und zusätzlich der Verwendung von Lösungsmitteln.

Der vorliegenden Erfindung liegt die Aufgabe zugrunde, ein kontinuierliches Verfahren zur Herstellung von Alkoxypolysiloxanen der allgemeinen Formel I zu finden, welches apparativ einfach und mit hoher Raum-/Zeitausbeute durchführbar ist, welches mit möglichst geringen Mengen zugeführter Energie und ohne zusätzliche Lösungsmittel arbeitet und bei dem Alkoxypolysiloxane in reproduzierbarer Zusammensetzung auch bei a-Werten von $\leqq 1{,}5$ erhalten werden.

Diese Aufgabe wird bei dem erfindungsgemäßen Verfahren dadurch gelöst, daß man in den unteren Bereich eines zylinderförmigen, gerührten Reaktors Silan oder ein Silangemisch und ein Gemisch aus HCl enthaltendem Alkohol und Was-

ser kontinuierlich einspeist, das gebildete Reaktionsprodukt mit überschüssigem, HCl enthaltendem Alkohol nach einer Verweilzeit von 30 bis 180 Minuten kontinuierlich am oberen Ende des Reaktors abzieht und den nichtgelösten, gasförmigen Anteil HCl am Kopf des Reaktors abführt, wobei die Temperatur des Reaktionsgemisches bzw. Reaktionsproduktes beim Durchströmen des Reaktors von einem Bereich von −17 bis +30°C auf einen Bereich von +30 bis 80°C angehoben wird und der Temperaturgradient mindestens 10°C betragen muß, und wobei man aus dem gebildeten Reaktionsprodukt außerhalb des Reaktors den überschüssigen Alkohol und gelösten Chlorwasserstoff in bekannter Weise vom Reaktionsprodukt abtrennt und den bei der Aufarbeitung des Reaktionsproduktes anfallenden, HCl enthaltenden Alkohol im Kreislauf in den Reaktor zurückführt.

Bei dem erfindungsgemäßen Verfahren wird somit nur ein Reaktor in Form eines zylinderförmigen, gerührten Reaktionsgefäßes eingesetzt. Als Reaktor wird insbesondere ein senkrechter Reaktor verwendet. Wenn auch ein zylinderförmiger Reaktor aus Gründen einfacher Konstruktion bevorzugt ist, kann jedoch z.B. auch ein aus Kugelsegmenten bestehender Reaktor eingesetzt werden. In den unteren Bereich des Reaktors werden mindestens zwei Ströme von Reaktanden eingespeist: a) das Silan oder Silangemisch und b) der für die Alkoholyse verwendete Alkohol im Überschuß und das für die Unterschußhydrolyse benötigte Wasser. Die bei der Alkoholyse nicht verbrauchte, überschüssige Menge Alkohol sättigt sich mit dem freiwerdenden HCl und wird im Verlauf des kontinuierlichen Prozesses, ergänzt durch die Menge des für die Alkoholyse benötigten Alkohols, dem Reaktor wieder zugeführt. Hierdurch wird immer eine hohe HCl-Konzentration im Alkohol beibehalten. Dies hat zur Folge, daß sich bei der Alkoholysereaktion nur die Menge HCl im überschüssigen Alkohol löst, die zur Einstellung der Sättigungskonzentration benötigt wird, während die restliche Menge HCl gasförmig aus dem Reaktionsmedium abgeführt wird und diesem die entsprechende Verdampfungswärme entzieht. Im unteren Bereich des Reaktors stellt sich deshalb eine Temperatur ein, die niedriger als die mittlere Temperatur der Reaktionsströme ist. Das Reaktionsgemisch kühlt sich im unteren Bereich des Reaktors ab.

Eine bevorzugte Ausführungsform des erfindungsgemäßen Verfahrens ist dadurch gekennzeichnet, daß man zunächst die Silane mit der gesamten Menge oder einer Teilmenge des HCl enthaltenden Alkohols vermischt und ganz oder teilweise reagieren läßt und diesem Vorreaktionsprodukt das Wasser, gegebenenfalls zusammen mit der restlichen Alkoholmenge, zudosiert. Auch in diesem Falle wird das zur partiellen Hydrolyse benötigte Wasser noch im unteren Bereich des Reaktors zugeführt.

Entsprechend den zudosierten Mengen an Silan, HCl-haltigem Alkohol und Wasser und dem Füllungsvermögen des Reaktors steigt nun das Reaktionsgemisch in den mittleren und in den oberen Bereich des Reaktors, in dem durch geeignete Temperierung eine Temperatur von +30 bis 80°C eingehalten wird. Nach einer mittleren Verweilzeit von 30 bis 180 Minuten fließt das Reaktionsprodukt aus dem oberen Bereich des Reaktors ab und wird der weiteren Aufarbeitung unterworfen. Aus dem Kopfende des Reaktors entweicht die im Reaktionsmedium unter den Verfahrensbedingungen nicht mehr lösliche Menge HCl und wird in bekannter Weise durch Neutralisation in eine deponierbare oder dem Abwasser zumischbare Form überführt.

Die Aufarbeitung des Reaktionsgemisches wird im wesentlichen davon bestimmt, ob das überfließende heterogene Reaktionsgemisch sich in vertretbarer Zeit in eine alkoholische obere und eine das Alkoxysiloxan enthaltende untere Phase trennt.

Trennt sich das Reaktionsgemisch nicht in angemessener Zeit, kann der HCl-beladene Alkohol in einer geeigneten Destillationsvorrichtung vom Reaktionsprodukt abgezogen und wieder dem unteren Ende des Reaktors, ergänzt durch die verbrauchte Menge Alkohol, zugeführt werden.

In den meisten Fällen trennen sich die Phasen des entstandenen Reaktionsgemisches, d.h., es trennt sich eine Siloxanphase von einer die überwiegende Menge HCl enthaltenden, alkoholischen Phase. In diesem Fall empfiehlt es sich, das aus dem Reaktor abgezogene heterogene Reaktionsgemisch in ein Zwischengefäß zu geben, in dem sich die beiden Phasen trennen und kontinuierlich abgezogen werden. Die Siloxanphase wird dann in bekannter Weise von gegebenenfalls gelöstem Alkohol und Halogenwasserstoff befreit; die Alkohol/HCl-Phase wird dem Reaktor wieder zugeführt.

Um aus den erhaltenen Alkoxypolysiloxanen noch gegebenenfalls vorhandene Anteile an SiCl-Gruppen sowie gelöstem Chlorwasserstoff abzutrennen, kann man in einer weiteren Ausgestaltung des Verfahrens die zunächst erhaltenen Alkoxypolysiloxane mit überschüssigen Mengen HCl-freien Alkohols versetzten, unter Rückflußbedingungen erhitzen, den Alkohol und das HCl abdestillieren und das Reaktionsprodukt gegebenenfalls neutralisieren.

Das erfindungsgemäße kontinuierliche Verfahren erfüllt alle der eingangs gestellten Forderungen. Auch nach mehrtägigem Betreiben des kontinuierlichen Verfahrens sind die Vorrichtung und das Reaktionsgemisch frei von gelartigen Anteilen. Dies ist eine wichtige Voraussetzung für die störungsfreie Durchführung des Verfahrens und insbesondere für den störungsfreien Lauf der für die Zudosierung der Reaktionsströme benötigten Pumpen und Dosiervorrichtungen.

Für das erfindungsgemäße Verfahren können beliebige Silane eingesetzt werden. Die Reste $R^1$ sind Alkyl- und/oder Arylreste. Als Alkylreste sind niedere Alkylreste bevorzugt, insbesondere Alkylreste mit 1 bis 6 Kohlenstoffatomen. Vorzugsweise sind die Alkylreste Methylreste. Man kann

jedoch auch Silane verwenden, welche höhere Alkylreste, z.B. solche mit bis zu 18 Kohlenstoffatomen an Silicium gebunden enthalten oder deren Alkylreste ungesättigt sind, wie z.B. Vinylreste. Als Arylreste werden Phenylreste bevorzugt.

Dem Silan bzw. Silangemisch können Organopolysiloxane zugesetzt werden. Die Organopolysiloxane können mono-, di- und trifunktionelle Organosiloxyeinheiten enthalten. Sie können zusätzlich an Silicium gebundene Alkoxygruppen $R^2O$- aufweisen. Beispiele solcher Siloxane sind Hexaorganodisiloxane sowie Organoalkoxysiloxane, wobei deren Zusammensetzung von der des Verfahrensproduktes abweichen kann. Die Organosilane und die Organopolysiloxane werden dabei nach Art und Menge so ausgewählt, daß sie hinsichtlich der direkt an das Si-Atom begundenen Gruppen $R^1$ summarisch der Zusammensetzung des Verfahrnesproduktes entsprechend. Unter den Bedingungen des erfindungsgemäßen Verfahrens tritt eine Spaltung der Organopolysiloxane, gefolgt von einem vollständigen Einbau der Spaltprodukte, ein.

Die zur Alkoholyse verwendeten Alkohole der Formel $R^2OH$ enthalten 1 bis 4 Kohlenstoffatome. Vorzugsweise verwendet man Alkohole mit 1 oder 2 Kohlenstoffatomen. Verwendet man Alkohole mit 3 oder 4 Kohlenstoffatomen, können diese auch verzweigt sein.

Es ist dem Fachmann verständlich, daß man außer Chlorsilanen auch andere Halogensilane verwenden kann. Diese scheiden jedoch in aller Regel schon aus wirtschaftlichen Gründen aus.

Der a-Wert der Alkoxypolysiloxane ergibt sich aus dem a-Wert der entsprechenden Silane, Silangemische oder Silan/Siloxan-Gemische, die für das Verfahren verwendet werden. Der b-Wert ergibt sich insbesondere aus der Menge des für die partielle Hydrolyse verwendeten Wassers. Er ist jedoch auch in gewissem Maße von der Reaktionstemperatur abhängig.

Das erfindungsgemäße Verfahren wird vorzugsweise in einer Vorrichtung gemäß beiliegender Zeichnung durchgeführt, welche gekennzeichnet ist durch einen zylinderförmigen Reaktor 1 mit Rührer 2 und Rührorganen 4, der durch gelochte horizontale Trennböden 6 in eine Mehrzahl von Rührzellen 3 a bis 3 e unterteilt ist, einer Leitung 7 mit Absperrorgan 8 und Dosiervorrichtung 9 für die Zuführung des Silans oder des Silangemisches, einer Leitung 10 mit Absperrorgan 11 und Dosiervorrichtung 12 für die Zuführung des Wassers oder eines Wasser/Alkohol-Gemisches, einer Leitung 16 mit Absperrorgan 17 und Dosiervorrichtung 18 für die Rückführung von chlorwasserstoffhaltigem Alkohol, wobei die Leitungen 7 und 16 in die am Reaktorboden befindliche Rührzelle 3 a münden und die Leitung 10 in die darüber angeordnete Rührzelle 3 b mündet, sowie einer Leitung 19 mit einer Kühlstrecke 20 zur Abführung des gasförmigen Chlorwasserstoffs und einer Leitung 21 zur Abführung des Reaktionsproduktes, wobei die Leitung 19 in den Kopf des Reaktors 1 mündet und die Leitung 21 im oberen Bereich des Reaktors 1 oberhalb der letzten Rührzelle 3 e angeordnet ist und wobei der Reaktor 1 im Bereich der Rührzellen 3 a bis 3 e mittels zweier separater Temperiermäntel 22 und 23 beheizbar oder kühlbar ist.

In den Rürzellen 3 a bis 3 e sind vorzugsweise Strömungsstörer 5 angeordnet.

Zur Durchführung des Verfahrens werden zunächst durch Leitung 7 das Halogensilan oder das entsprechende Halogensilan-Gemisch sowie über Leitung 16 der in der Phasentrennung und/oder Destillation anfallende und rückgeführte, HCl-haltige Alkohol am Fuß des Reaktors eingespeist. Zur Dosierung dienen bevorzugt Dosierpumpen 9 bzw. 18, die über Waage oder Durchflußmengenmesser kontrolliert und nachgeregelt werden können. Unmittelbar vor Eintritt in den Reaktor ist jeweils ein Absperrorgan 8 bzw. 17 vorgesehen.

Die beiden in den Reaktor eintretenden Reaktionsströme werden in der ersten Rührzelle 3 a mit Hilfe des Rührorgans 4 intensiv vermischt und zur Reaktion gebracht.

In der zweiten Rührzelle 3 b erfolgt über Rohrleitung 10 die Zufuhr des Alkohol/Wasser-Gemisches. Die Zufuhr erfolgt auch hier vorzugsweise über eine Dosierpumpe 12, die über Volumen- oder Massenkontrolle nachgeregelt werden kann. Vor Eintritt in den Reaktor ist ein Absperrorgan 11 vorgesehen.

Die gelochten Trennböden 6 zwischen den einzelnen Rührzellen 3 a bis 3 e erlauben einerseits eine nahezu rückvermischungsfreie Arbeitsweise zwischen den einzelnen Zellen und andererseits den gezielten Transport von Reaktionsprodukt und sich bei der Reaktion entwickelnden gasförmigen Halogenwasserstoff. Bei der intensiven Vermischung, die durch die Strömungsstörer 5 noch begünstigt wird, wird der gasförmige Halogenwasserstoff auf seinem Wege durch die Reaktorzellen von eventuell anhaftenden Halogensilanspuren befreit, bevor er über die mit einem Kühlmantel 20 versehene Abgasleitung 19 den Reaktor verläßt. Durch die Reihenschaltung mehrerer Rührzellen, die jeweils nahezu einen idealen Rührkessel darstellen, ist gewährleistet, daß vor Überlauf des Reaktionsproduktes in Leitung 21 keine Silane mehr nachweisbar sind. Es ist zwar prinzipiell möglich, die erfindungsgemäße Vorrichtung mit nur drei Rührzellen auszulegen. Es empfiehlt sich jedoch, mindestens vier, vorzugsweise mindestens fünf, Rührzellen vorzusehen, um ein Endprodukt, das praktisch frei von Silanen ist, zu erhalten.

Durch den Entzug der Verdampfungswärme für HCl kühlt sich das Reaktionsgemisch im unteren Bereich des Reaktors ab. Sollte sich eine Temperierung als notwendig erweisen, kann über Temperiermantel 23 des Reaktionsgefäßes geheizt oder gekühlt werden.

Es ist auch möglich, durch die Leitung 13 in den unteren Bereich des Reaktors reinen Alkohol oder ein Alkohol/Wasser-Gemisch einzuspeisen sowie gegebenenfalls über Leitung 10 lediglich Wasser zu dosieren. Der Massenstrom über Leitung 13 wird dann ebenfalls über eine regelbare Dosierpumpe 15 zugeführt. Eine Absperrung 14 vor Reaktoreintritt ist auch hier vorgesehen. Es ist aber bevorzugt, zumindest die Hauptmenge des Wassers über die Leitung 10 in die zweite Rührzelle 3 b einzuspeisen.

Das Reaktionsgemisch steigt infolge der kontinuierlichen Verfahrensweise in den Rührzellen des Reaktors entsprechend der zugeführten Mengen an Silan und Alkohol/Wasser langsam nach oben. Zur Einstellung der dort gewünschten Reaktionstemperatur von +30 bis 80°C wird der Heizmantel 22 des Reaktors 1 mit Heizflüssigkeit beschickt. Die Reaktionsströme werden in solchen Mengen eingespeist, daß das Reaktionsgemisch nach etwa 60 bis 180 Minuten an der Überlaufstelle des Reaktors 1 angelangt ist, an der die Leitung 21 in den Reaktor mündet. Das Reaktionsgemisch fließt durch die Leitung 21 in eine Vorrichtung zur weiteren Aufarbeitung, insbesondere zur Abtrennung des Alkohols und der im Alkohol gelösten Mengen Chlorwasserstoff.

Der durch die Leitung 19 abgeführte Chlorwasserstoff kann in einem Abgaswäscher in Wasser absorbiert und die sich bildende, niedrigkonzentrierte Salzsäure neutralisiert werden.

Eine bevorzugte Ausführungsform der erfindungsgemäßen Vorrichtung ist dadurch gekennzeichnet, daß die Leitung 21 in einen Behälter 24 mündet, in dessen oberen Bereich eine Überlaufleitung 25 und in dessen Boden eine als Syphon gestaltete Abführungsleitung 27 angeordnet ist. In dem Behälter 24 trennt sich die Siloxanphase von der Alkoholphase. Die alkoholische, HCl enthaltende und meist mit HCl gesättigte Phase läuft kontinuierlich über die Überlaufleitung 25 zu einem Zwischenbehälter 26 und wird von dort der Dosiervorrichtung 18 zugeführt.

Das Reaktionsprodukt wird mittels der Leitung 27 aus dem Trennbehälter 24 abgezogen. Die Aufarbeitung des Reaktionsgemisches geschieht in bekannter Weise. So kann man z.B. die noch im Reaktionsprodukt vorhandenen Mengen Halogenwasserstoff mit basischen, vorzugsweise pulverförmigen, Verbindungen, wie z.B. Calciumoxid oder Magnesiumoxid, neutralisieren. Sind in dem Reaktionsprodukt noch geringe Mengen SiCl-Gruppen enthalten, können diese durch erneuten Zusatz von Alkohol und Erhitzen des Siloxan/Alkohol-Gemisches entfernt werden.

Das erfindungsgemäße Verfahren und die hierfür verwendete Vorrichtung werden in den folgenden Beispielen noch näher erläutert.

Beispiel 1

Herstellung eines Methylethoxypolysiloxans

In die Vorrichtung werden über die Leitung 7,25 kg/h Methyltrichlorsilan und über die Leitung 16, 30 kg/h HCl-haltiger Alkohol eingespeist. Das Alkoholgemisch enthält 19,5 kg Ethanol und 10,5 kg HCl. Die Temperatur des Methyltrichlorsilans liegt bei 18°C, die des sauren Alkohols bei 30°C. Dabei stellt sich bei der Reaktion in der Rührzelle 3 a eine Temperatur von −10°C ein. Das Reaktionsgemisch verläßt die erste Rührzelle 3 a und trifft auf einen Alkohol/Wasserstrom von 7,73 kg/h, der aus 3,98 kg Wasser und 3,75 kg Ethanol besteht und über Leitung 10 eingespeist wird. Dieses Gemisch hat eine Temperatur von 20°C. Das Reaktionsgemisch verläßt die zweite Rührzelle 3 b mit einer Temperatur von 30°C. Der Heiz- und Kühlmantel 22 für die Rührzellen 3 c bis 3 e wird so temperiert, daß das über Leitung 21 austretende Reaktionsgemisch eine Temperatur von 40°C besitzt. Die mittlere Verweilzeit des Reaktionsgemisches beträgt 2,1 h. Der im wesentlichen aus HCl bestehende Abgasstrom verläßt über Leitung 19 den Reaktor. Das den Reaktor verlassende Reaktionsgemisch gelangt in den Abscheider 24, wo über Leitung 25 kontinuierlich HCl-haltiger Alkohol abläuft, der über den Zwischenbehälter 26 und Leitung 16 mit einer Temperatur von 30°C wieder in die erste Rührzelle 3 a eingespeist wird. Über die Leitung 27 wird HCl und Alkohol enthaltendes Reaktionsprodukt abegtrennt.

Das Reaktionsprodukt wird einem Dünnschichtverdampfer zugeführt, in dem es unter Normaldruck ausdestilliert wird. Das saure Destillat wird ebenfalls über den Zwischenbehälter 26 und die Leitung 16 mit eingespeist.

Das Produkt gelangt nun in einen Mischbehälter, in dem es mit Alkohol vermischt und mit Magnesiumoxid zur Neutralisation versetzt wird. Von dort gelangt das Produkt über einen Filter in einen zweiten Dünnschichtverdampfer, wo es unter einem Druck von 50 hPa erneut ausdestilliert wird. Der abdestillierte Alkohol wird in den Mischbehälter zurückgeführt. Das den zweiten Dünnschichtverdampfer mit einem Massenstrom von 13,5 kg/h verlassende Endprodukt wird nochmals filtriert.

Das so hergestellte Methylethoxypolysiloxan ist eine farblose, klare Flüssigkeit, die folgende analytische Daten aufweist:

| | |
|---|---|
| Ethoxygehalt: | 20 Gew.-% |
| Viskosität: | 500 mPas bei 25°C |

Beispiel 2

Herstellung eines Phenylmethylethoxypolysiloxans

Wie in Beispiel 1 beschrieben wird ein Phenylmethylethoxypolysiloxan hergestellt, wobei folgende Änderungen durchgeführt werden: Über Leitung 7 wird ein Gemisch aus 18 kg Phenyltrichlorsilan, 6,5 kg Methyltrichlorsilan und 4,2 kg Dimethyldichlorsilan, bei einer Temperatur von 18°C eingespeist und über Leitung 16 werden 60 kg/h HCl-haltiger Alkohol bei einer Temperatur von 45°C zugesetzt. In der ersten Rührzelle 3 a stellt sich bei der Reaktion eine Temperatur von 5°C ein. Über Leitung 10 wird ein Gemisch aus 3,2 kg/h Wasser und 5,5 kg/h Ethanol zudosiert. Die Temperatur beträgt in der zweiten Rührzelle 3 b 35°C. Das über Leitung 21 mit 80 kg/h austretende Reaktionsgemisch besitzt eine Temperatur von 60°C. Die mittlere Verweilzeit beträgt 0,8 h. Das über die Leitung 27 entnommene Reaktionsprodukt fällt in einem Massenstrom von 22 kg/h an und wird wie in Beispiel 1 beschrieben aufgearbeitet.

Das so hergestellte Phenylmethylethoxypolysiloxan weist folgende analytische Daten auf:

| | |
|---|---|
| Ethoxygehalt: | 22,6 Gew.-% |
| Viskosität: | 350 mPas bei 25°C |

Beispiel 3
Herstellung eines Phenylmethylethoxypolysiloxanharzes

Wie in Beispiel 1 beschrieben wird ein Phenylmethylethoxypolysiloxan hergestellt, wobei folgende Änderungen vorgenommen werden: Über die Leitung 7 wird ein Gemisch aus 11,15 kg/h Phenyltrichlorsilan, 7,88 kg/h Methyltrichlorsilan und 3,90 kg/h Polydimethylsiloxan (Kettenlänge: 50 Si-Einheiten) bei einer Tempertur von 20°C eingespeist. Über die Leitung 16 werden ebenfalls bei 20°C 30 kg/h HCl-haltiger Alkohol zudosiert, der aus 4,5 kg HCl und 25,5 kg Alkohol besteht. Es stellt sich in der ersten Rührzelle 3 a eine Temperatur von 15°C ein. Über Leitung 10 werden 5,3 kg/h eines Gemisches aus gleichen Gew.-Teilen Wasser und Alkohol zugesetzt. Die Temperatur in der Rührzelle 3 b beträgt 30°C. Das über Leitung 21 mit einem Massenstrom von 15 kg/h entnommene Reaktionsprodukt weist eine Temperatur von 65°C auf und wird die folgt aufgearbeitet:

Das saure Rohprodukt wird in einem ersten von zwei hintereinander geschalteten Dünnschichtverdampfern unter Normaldruck ausdestilliert. Vor Eintritt in den zweiten Dünnschichtverdampfer werden etwa 50 Vol.-% HCl-freien Alkohols zugeführt und unter einem Druck von 20 bis 50 hPa erneut der gesamte Alkohol abgezogen. Das den zweiten Dünnschichtverdampfer verlassende Harz wird mit Xylol versetzt. Der saure Alkohol aus dem ersten Verdampfer wird dem Zwischenbehälter 26 zugeführt, während der Alkohol des zweiten Verdampfers nach Neutralisation erneut dem den ersten Verdampfer verlassenden Rohrprodukt zugesetzt wird.

Die so hergestellte Lösung des Phenylmethylethoxypolysiloxanharzes weist folgende analytische Daten auf:

| | |
|---|---|
| Festkörper: | 70 Gew.-% |
| Ethoxygehalt: | 6,2 Gew.-% |
| Viskosität: | 600 mPas bei 25°C |

**Patentansprüche**

1. Verfahren zur kontinuierlichen Herstellung von Alkoxypolysiloxanen der allgemeinen Formel

$$R^1{}_aSi(OR^2)_b \atop {| \atop \dfrac{O_{4-(a+b)}}{2}}$$

wobei

$R^1$ ein Alkyl- oder Arylrest,

$R^2$ ein niederer Alkylrest mit 1 bis Kohlenstoffatomen,

$a \leqq 1{,}5$,

$b \leqq 2$ und

$a+b \leqq 3$ ist,

durch Solvolyse von Chlorsilanen der allgemeinen Formel

$$R^1_aSiCl_{4-a}$$

mit, bezogen auf siliciumgebundenes Chlor, einem Überschuß an Alkohol und einem Unterschuß an Wasser und partielle Kondensation der Solvolyseprodukte, dadurch gekennzeichnet, daß man in den unteren Bereich eines zylinderförmigen, gerührten Reaktors Silan oder ein Silangemisch und ein Gemisch aus HCl enthaltendem Alkohol und Wasser kontinuierlich einspeist, das gebildete Reaktionsprodukt mit überschüssigem, HCl enthaltendem Alkohol nach einer Verweilzeit von 30 bis 180 Minuten kontinuierlich am oberen Ende des Reaktors abzieht und den nichtgelösten, gasförmigen Anteil HCl am Kopf des Reaktors abführt, wobei die Temperatur des Reaktionsgemisches bzw. Reaktionsproduktes beim Durchströmen des Reaktors von einem Bereich von −17 bis +30°C auf einen Bereich von +30 bis 80°C angehoben wird und der Temperaturgradient mindestens 10°C betragen muß, und wobei man aus dem gebildeten Reaktionsprodukt außerhalb des Reaktors den überschüssigen Alkohol und gelösten Chlorwasserstoff in bekannter Weise vom Reaktionsprodukt abtrennt und den bei der Aufarbeitung des Reaktionsproduktes anfallenden, HCl enthaltenden Alkohol im Kreislauf in den Reaktor zurückführt.

2. Verfahren nach Anspruch 1, dadurch gekennzeichnet, daß man zunächst das Silan oder Silangemisch mit der gesamten Menge oder einer Teilmenge des HCl enthaltenden Alkohols vermischt und diesem Reaktionsgemisch das Wasser, gegebenenfalls zusammen mit der restlichen Alkoholmenge, zudosiert.

3. Verfahren nach Anspruch 1 oder 2, dadurch gekennzeichnet, daß man dem Reaktor Silan oder ein Silangemisch, welches Organopolysiloxane enthält, zuführt.

4. Verfahren nach Anspruch 1 oder 2, dadurch gekennzeichnet, daß man, falls das aus dem Reaktor abgezogene Gemisch heterogen ist, dieses in eine Siloxanphase und eine HCl enthaltende, alkoholische Phase trennt, die Siloxanphase von gegebenenfalls gelöstem Alkohol und Halogenwasserstoff in bekannter Weise befreit und den HCl enthaltenden Alkohol dem Reaktor wieder zuführt.

5. Verfahren nach Anspruch 1, 2 oder 3, dadurch gekennzeichnet, daß man die erhaltenen Alkoxypolysiloxane mit, in bezug auf noch vorhandene SiCl-Gruppen und gelöstes HCl, überschüssigen Mengen HCl-freien Alkohols versetzt und unter Rückflußbedingungen erhitzt, anschließend den Alkohol und HCl abgdestilliert und das Reaktionsprodukt gegebenenfalls neutralisiert.

6. Vorrichtung zur Durchführung des Verfahrens nach einem oder mehreren der Ansprüche 1 bis 5, gekennzeichnet durch einen zylinderförmigen Reaktor (1) mit Rührer (2) und Rührorganen (4), der durch gelochte horizontale Trennböden (6) in eine Mehrzahl von Rührzellen (3 a bis 3 e) unterteilt ist, einer Leitung (7) mit Absperrorgan (8) und Dosiervorrichtung (9) für die Zuführung des Silans oder des Silangemisches, einer Leitung (10) mit Absperrorgan (11) und Dosiervorrichtung (12) für die Zuführung des Wassers oder eines Wasser/Alkohol-Gemisches, einer Leitung (16) mit Absperrorgan (17) und Dosiervorrichtung (18) für die Rückführung von chlorwasserstoffhaltigem Alkohol, wobei die Leitungen (7) und (16) in die am Reaktorboden befindliche Rührzelle (3 a) münden und die Leitung (10) in die darüber angeordnete Rührzelle (3 b) mündet, sowie einer Leitung (19) mit einer Kühlstrecke (20) zur Abführung des gasförmigen Chlorwasserstoffs und einer Leitung (21) zur Abführung des Reaktionsproduktes, wobei die Leitung (19) in den Kopf des Reaktors (1) mündet und die Leitung (21) im oberen Bereich des Reaktors (1) oberhalb der letzten Rührzelle (3 e) angeordnet ist und wobei der Reaktor (11) im Bereich der Rührzellen (3 a bis 3 e) mittels zweier separater Temperiermäntel (22) und (23) beheizbar oder kühlbar ist.

7. Vorrichtung nach Anspruch 6, dadurch gekennzeichnet, daß in den Rührzellen (3 a bis 3 e) Strömungsstörer (5) angeordnet sind.

8. Vorrichtung nach Anspruch 6 oder 7, dadurch gekennzeichnet, daß der Reaktor (1) eine Leitung (13) mit Absperrorgan (14) und Dosiervorrichtung (15) für die Zuführung des Alkohols oder des Alkohol/Wasser-Gemisches aufweist.

9. Vorrichtung nach einem oder mehreren der Ansprüche 6 bis 8, dadurch gekennzeichnet, daß die Leitung (21) in einen Behälter (24) mündet, in dessen oberen Bereich eine Überlaufleitung (25) und in dessen Boden eine in Form eines Syphons gestaltete Abführungsleitung (27) angeordnet ist.

10. Vorrichtung nach Anspruch 9, dadurch gekennzeichnet, daß die Überlaufleitung (25) in einen Zwischenbehälter (26) mündet, der mit der Leitung (16) verbunden ist.

**Revendications**

1. Procédé de fabrication en continu d'alcoxypolysiloxanes de formule générale

$$\underline{\begin{array}{c} R^1{}_aSi(OR^2)_b \\ | \\ O_{4-(a+b)} \end{array}} \qquad (I)$$

dans laquelle

$R^1$ est un radical alcoyle ou aryle,

$R^2$ est un radical alcoyle inférieur, contenant de 1 à 4 atomes de carbone,

$a \leq 1,5$,

$b \leq 2$ et

$a+b \leq 3$,

par solvolyse de chlorosilanes de formule générale

$$R^1_aSiCl_{4-a}$$

avec, par rapport au chlore lié au silicium, un excès en alcool et un déficit en eau et une condensation partielle des produits de solvolyse, caractérisé en ce qu'on introduit de manière continue dans la zone inférieure d'un réacteur de forme cylindrique sous agitation du silane ou un mélange de silanes et un mélange d'alcool contenant du HCl et d'eau, puis après un temps de séjour de 30 à 180 minutes on soutire en continu, à l'extrémité supérieure du réacteur, le produit de réaction formé contenant de l'alcool en excès avec du HCl puis on sépare au sommet du réacteur la quantité gazeuse et non dissoute de HCl, la température du mélange réactionnel ou du produit réactionnel passant d'une plage de −17 à +30°C à une plage de +30 à +80°C lors de son passage à travers le réacteur et le gradient thermique devant être au moins de 10°C puis, à l'extérieur du réacteur, on sépare, d'une manière connue, l'alcool en excès et l'acide chlorhydrique dissout du produit réactionnel et l'alcool, contenant du HCl, qui se forme pendant le retraitement du produit réactionnel est réintroduit en recyclage dans le réacteur.

2. Procédé selon la revendication 1, caractérisé en ce qu'on mélange d'abord le silane ou le mélange de silanes à la quantité totale ou à une quantité partielle de l'alcool contenant du HCl et on ajoute l'eau à ce mélange réactionnel, éventuellement avec la quantité restante d'alcool.

3. Procédé selon la revendication 1 ou 2, caractérisé en ce qu'on introduit dans le réacteur un silane ou un mélange de silanes qui contient des organopolysiloxanes.

4. Procédé selon la revendication 1 ou 2, caractérisé en ce qu'on sépare, dans le cas où le mélange retiré du réacteur est hétérogène, ledit mélange en une phase siloxane et en une phase alcoolique contenant du HCl, on libère la phase siloxane, d'une manière connue, de l'alcool éventuellement dissout et de l'hydracide halogéné et on réintroduit dans le réacteur l'alcool contenant du HCl.

5. Procédé selon l'une quelconque des revendications 1 à 3, caractérisé en ce qu'on mélange les alcoxypolysiloxanes obtenus avec, par rapport aux groupes SiCl et au HCl dissout encore présents, des quantités en excès d'alcool exempt de HCl et on chauffe dans des conditions de reflueement, puis on sépare l'alcool et le HCl par distillation et, le cas échéant, on neutralise le produit réactionnel.

6. Dispositif pour réaliser le procédé selon une ou plusieurs des revendications 1 à 5, caractérisé en ce qu'il comporte un réacteur (1) de forme cylindrique comportant un agitateur (2) et des éléments agitateurs (4), lequel réacteur (1) est divisé au moyen de plaques horizontales de séparation (6) perforées en une série de cellules d'agitation (3a à 3e), comporte une conduite (7) pourvue d'un élément d'obturation (8) et d'un dispositif de dosage (9) pour l'introduction du silane ou du mélange de silanes, une conduite (10) pourvue d'un élément d'obturation (11) et d'un dispositif de dosage (12) pour l'introduction de l'eau ou d'un mélange eau/alcool, une conduite (16) pourvue d'un élément d'obturation (17) et d'un dispositif de dosage (18) pour la remise en circuit d'alcool contenant de l'acide chlorhydrique, les conduites (7) et (16) débouchant dans la cellule d'agitation (3a) située dans le

fond du réacteur (1) et la conduite (10) débouchant dans la cellule d'agitation (3b) située juste au-dessus, ainsi qu'une conduite (19) pourvue d'un parcours de refroidissement (20) pour l'évacuation de l'acide chlorhydrique à l'état gazeux et une conduite (21) pour l'évacuation du produit réactionnel, la conduite (19) débouchant dans la tête du réacteur (1) et la conduite (21) étant disposée dans la zone supérieure du réacteur (1), au-dessus de la dernière cellule d'agitation (3e), et le réacteur (1) pouvant être chauffé ou refroidi au niveau des cellules d'agitation (3a à 3e) au moyen de deux parois de réglage de température (22) et (23) séparées.

7. Dispositif selon la revendication 6, caractérisé en ce que des régulateurs d'écoulement (5) sont disposés dans les cellules d'agitation (3a à 3e).

8. Dispositif selon la revendication 6 ou 7, caractérisé en ce que le réacteur (1) comporte une conduite (13) pourvue d'un élément d'obturation (14) et d'un dispositif de dosage (15) pour l'introduction de l'alcool ou du mélange alcool-eau.

9. Dispositif selon l'une ou plusieurs des revendications 6 à 8, caractérisé en ce que la conduite (21) débouche dans un réservoir (24) dans la zone supérieure duquel est disposée une conduite de déversement (25) et dans le fond duquel est disposée une conduite d'évacuation (27) réalisée sous la forme d'un syphon.

10. Dispositif selon la revendication 9, caractérisé en ce que la conduite de déversement (25) débouche dans un réservoir intermédiaire (26) qui est relié à la conduite (16).

**Claims**

1. A method for the continuous production of alkoxypolysiloxanes of the general formula

$$R^1_aSi(OR^2)_b \atop \left| \atop \dfrac{O_{4-(a+b)}}{2}\right.$$

where

$R^1$ is an alkyl or aryl radical,

$R^2$ is a low alkyl radical with 1 to 4 carbon atoms,

$a \leq 1.5$,

$b \leq 2$ and

$a+b \leq 3$

by solvolysis of chlorosilanes of the general formula

$$R^1_aSiCl_{4-a}$$

with an excess of alcohol and a deficiency of water with reference to the silicon bound chlorine, and a partial condensation of the solvolysis products, characterized in that silane or a silane water and a mixture of HCl containing alcohol and water is continuously fed into the lower zone of a cylindrical agitated reactor, in that the formed reaction product with excess alcohol containing HCl is continuously drawn off at the upper end of the reactor after a sojourn time ranging from 30 to 180 minutes, and in that the non-dissolved gaseous HCl proportion is removed at the reactor head, the temperature of the reaction mixture or of the reaction product being raised as it passes through the reactor, from a range of −17 to +30°C to a range of +30 to 80°C, and the temperature gradient having to amount to at least 10°C, and the excess alcohol and the dissolved hydrogen chloride from the reaction product being separated outside the reactor from the formed reaction product in the known way, and the alcohol containing HCl obtained during the processing of the reaction product being recirculated into the reactor.

2. A method according to claim 1, characterized in that first the silane or silane mixture is mixed with the total quantity or part quantity of the alcohol containing HCl, and in that water, if required, together with the remaining quantity of alcohol, is dosed to this reaction mixture.

3. A method according to claim 1 or 2, characterized in that silane or a silane mixture containing organopolysiloxanes is supplied to the reactor.

4. A method according to claim 1 or 2, characterized in that if the mixture drawn off from the reactor is heterogeneous, the latter is separated into a siloxane phase and an alcoholic phase containing HCl, in that dissolved alcohol and hydrogen halide, if necessary, are removed from the siloxane phase in the known way, and in that the alcohol containing HCl is resupplied to the reactor.

5. A method according to claim 1, 2 or 3, characterized in that the alkoxypolysiloxanes obtained are mixed with excess quantities of HCl-free alcohol with reference to still existing SiCl groups and any dissolved HCl, and in that they are heated under reflux conditions, and in that the alcohol and HCl are distilled off and in that the reaction product is neutralised if necessary.

6. An apparatus for the implementation of the method according to one or several of claims 1 to 5, characterized by a cylindrical reactor (1) with an agitator (2) and agitator elements (4), which reactor is subdivided by perforated horizontal partitions (6) into a plurality of agitator cells (3a to 3e), a line (7) with a shut-off device (8) and a dosing appliance (9) for the feeding of the silane or silane mixture, a line (10) with a shut-off device (11) and a dosing appliance (12) for the feeding of the water or a water/alcohol mixture, a line (16) with a shut down device (17) and dosing appliance (18) for the return of the alcohol containing hydrogen chloride, the lines (7) and (16) issuing in the agitator cell (3a) located at the reactor bottom and the line (10) issuing in the agitator cell (3b) disposed on top thereof, and with a line (19) with a cooling stretch (20) for the eduction of the gaseous hydrogen chloride and a line (21) for the eduction of the reaction product, the line (19) issuing into the head of the reactor (1) and the line (21) being arranged in the upper region of the reactor (1) above the final agitator cell (3e) and the

reactor (1) being capable of cooling or heating in the zone of the agitator cells (3a to 3e) by means of two separate temperature regulating jackets (22) and (23).

7. An apparatus according to claim 6, characterized in that flow interference means (5) are arranged in the agitator cells (3a to 3e).

8. An apparatus according to claim 6 or 7, characterized in that the reactor (1) has a line (13) with a shutdown device (14) and a dosing appliance (15) for the feeding of the alcohol or of the alcohol/water mixture.

9. An apparatus according to one or several of claims 6 to 8, characterized in that the line (21) issues in a tank (24), in the upper zone whereof, there is arranged an overflow line (25) and at the bottom whereof, there is arranged an eduction line (27) designed in the form of a syphon.

10. An apparatus according to claim 9, characterized in that the overflow line (25) issues in an intermediate tank (26) that is connected to the line (16).

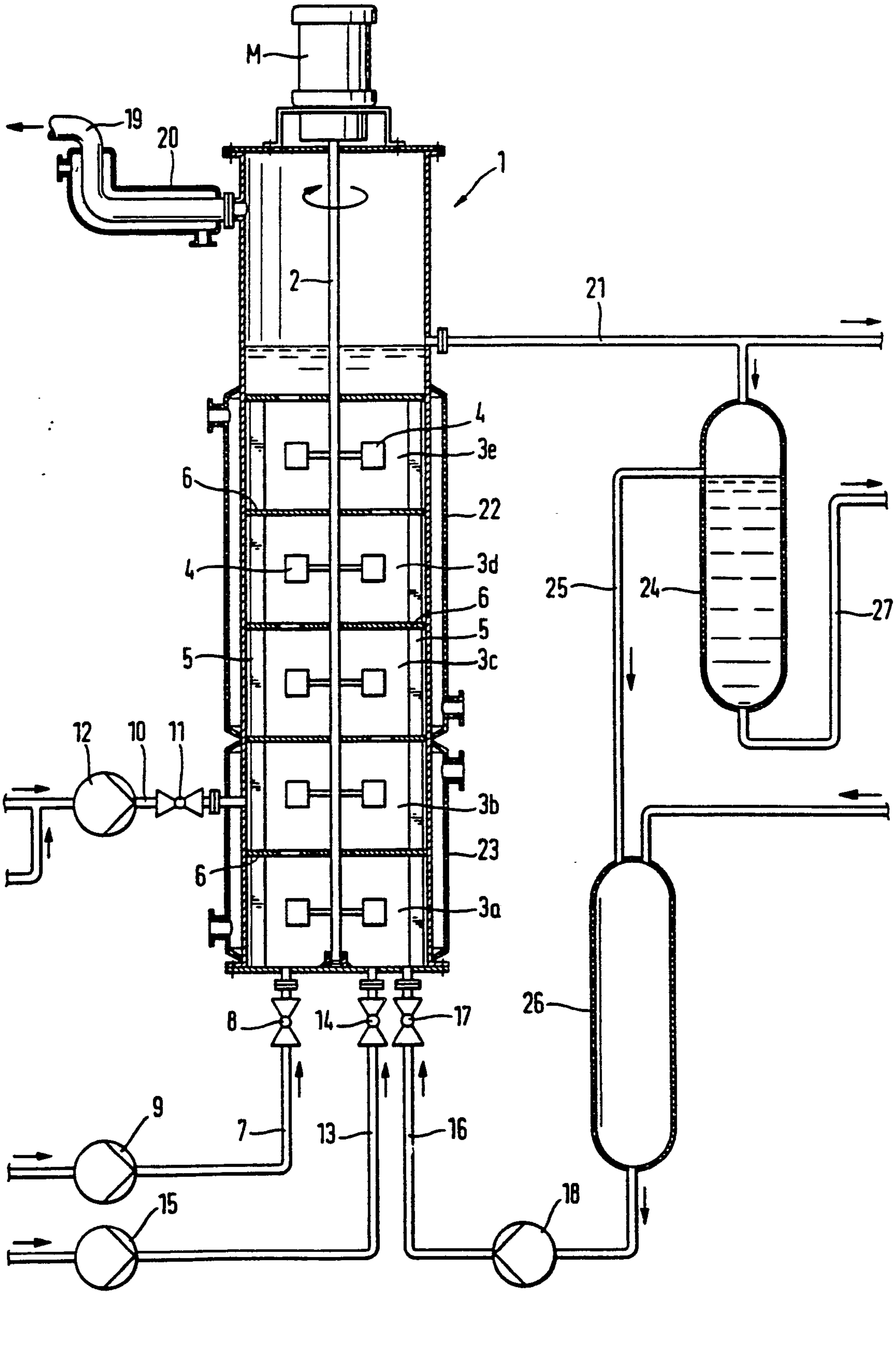
M
19
20
1
2
21
4
3e
6
22
4
3d
25
24
27
6
5
5
3c
12
10
11
3b
23
6
3a
26
8
14
17
9
7
13
16
15
18